# FASCICULE DE BREVET EUROPEEN

(11) **EP 4 255 957 B1**
(45) Date de publication et mention de la délivrance du brevet: **18.11.2026**
(21) Numéro de dépôt: 21834829.0
(22) Date de dépôt: 29.11.2021
(51) Int. Cl.: C08G 63/181, C08G 63/672, C08G 63/78, C08G 63/80, C08G 63/82, C08G 63/88

(54) **PROCÉDÉ DE SYNTHÈSE DE PEF**
VERFAHREN ZUR PEF-SYNTHESE
METHOD FOR SYNTHESISING PEF

(30) Priorité: 04.12.2020 FR 2012691
(43) Date de publication de la demande: 11.10.2023
(73) Titulaire: COMPAGNIE GENERALE DES ETABLISSEMENTS MICHELIN, 63000 Clermont-Ferrand (FR); Centre National de la Recherche Scientifique, 75794 Paris (FR); UNIVERSITE CLAUDE BERNARD - LYON 1, 69100 Villeurbanne (FR); Université Jean Monnet Saint-Étienne, 42023 Saint-Étienne Cedex 2 (FR); INSA Lyon, 69621 Villeurbanne Cedex (FR)
(72) Inventeur: SUTTER, Marc, 63040 CLERMONT-FERRAND Cedex 9 (FR); LE CLERC, Christophe, 63040 CLERMONT-FERRAND Cedex 9 (FR); POLONI, Mélissa, 69621 Villeurbanne cedex (FR); COLELLA, Marion, 68621 Villeurbanne cedex (FR); FENOUILLOT-RIMLINGER, Françoise, 69621 Villeurbanne cedex (FR); BERNARD, Julien, 69621 Villeurbanne cedex (FR)
(74) Mandataire: M.F.P. Michelin
(86) Numéro de dépôt international: PCT/FR2021/052116
(87) Numéro de publication internationale: WO 2022/117937

(56) Documents cités:
- EP-A1- 3 116 932
- NEJIB KASMI, GEORGE Z.PAPAGEORGIOU, DIMITRI S.ACHILIAS, DIMITRIOS N.BIKIARIS: "Solid-State Polymerization of Poly(Ethylene Furanoate) Biobased Polyester, II: An efficient and facile method to synthetize high molecular weight polyester appropriate for food packaging applications", POLYMERS, vol. 10, 25 April 2018 (2018-04-25), pages 1 - 21, XP002803871, DOI: 10.3390/polym10050471
- TERZOPOULOU ZOE ET AL: "Effect of catalyst type on molecular weight increase and coloration of poly(ethylene furanoate) biobased polyester during melt polycondensation", POLYM. CHEM., vol. 8, 25 October 2017 (2017-10-25), pages 6895 - 6908, XP055800859

## Description

### Domaine technique de l'invention

La présente invention est relative au domaine des polyesters et des procédés de fabrication de polyesters.

### Art antérieur

Les polyesters connaissent de nombreuses applications dans les domaines industriels et textiles. Leur variété d'application est telle que les volumes produits chaque année sont très importants. Aussi, il est d'intérêt de synthétiser des polyesters à partir de monomères issus de ressources renouvelables, et présentant des caractéristiques techniques permettant de les substituer à des polyesters pétrosourcés tels que le polytéréphtalate d'éthylène (PET).

De nombreuses recherches ont été menées pour produire des polyesters à partir de monomères furanedicarboxylate. Ces derniers peuvent en effet être produits à partir de ressources naturelles telles que des sucres. La synthèse du polyester comprend typiquement une étape d'estérification et une étape de polycondensation, éventuellement suivie d'étapes de cristallisation et de post-condensation à l'état solide afin d'ajuster les propriétés du polyester. De la conduite de ces différentes étapes dépend la structure, et donc les caractéristiques, du polyester obtenu.

Par exemple, la demande WO 2015/137805 décrit un polyester de type polyethylène furanoate (PEF) présentant un faible taux de motifs diéthylène glycol et son procédé de synthèse. La synthèse comprend en particulier des étapes d'estérification, en présence d'un composé suppresseur de la formation de diéthylène glycol, et de polycondensation. La présence de ce composé suppresseur permet d'obtenir une quantité de motifs diéthylène glycol dans le PEF très faible et ainsi d'améliorer la température de fusion et le taux de cristallinité des polyesters obtenus.

Des recherches ont été menées sur la synthèse de PEF de haut poids moléculaire, en particulier pour des utilisations dans le domaine de l'emballage sous forme de films comprenant des étapes de transestérification et de polycondensation en milieu fondu (Polymers 2018, 10, 471 ; Polym.Chem. 2017, 8, 6895-6908). Toutefois, les conditions opératoires utilisées ne permettent pas d'obtenir de polymères dont la température de fusion dépasse 220°C.

Poursuivant ses recherches, la demanderesse a découvert un polyester de type polyethylène furanoate ayant une température de fusion, une viscosité et un taux de cristallinité améliorés et présentant une excellente processabilité. Ce polyester peut être obtenu par l'association d'étapes et de conditions opératoires particulières qui constituent une amélioration des procédés connus de l'art antérieur.

### Description détaillée de l'invention

L'invention concerne au moins l'une des réalisations suivantes :
1. Polyester comprenant des motifs éthylène 2,5-furanedicarboxylate et des motifs diéthylène glycol, ledit polyester présentant une température de fusion Tf supérieure ou égale à 225°C, une viscosité intrinsèque supérieure ou égale à 0 ,65 dL/g, et dans lequel :
   - la teneur en motif diéthylène glycol, noté DEG, est inférieure à 4%mol,
   - la quantité de fonctions ester situées en bout de chaîne est inférieure à 100 meq/kg.
2. Polyester selon la réalisation précédente, dans lequel la teneur en DEG est inférieure à 3%mol, de préférence inférieure à 2%mol.
3. Polyester selon l'une quelconque des réalisations précédentes dans lequel la température de fusion Tf est supérieure ou égale à 230°C.
4. Polyester selon l'une quelconque des réalisations précédentes présentant une dispersité inférieure à 1,9, de préférence compris entre 1,7 et 1,9.
5. Polyester selon l'une quelconque des réalisations précédentes dans lequel la quantité de fonctions ester situées en bout de chaîne est inférieure à 80 meq/kg, et de manière préférée inférieure à 70 meq/kg.
6. Polyester selon l'une quelconque des réalisations précédentes dans lequel la viscosité intrinsèque est comprise entre 0,65 et 0,90 dL/g.
7. Polyester selon l'une quelconque des réalisations précédentes dans lequel la température de transition vitreuse T_{g} est comprise entre 70 et 90°C.
8. Procédé de préparation d'un polyester comprenant successivement :
   - Une étape de transestérification d'une composition comprenant un composé de type furanedicarboxylate, noté RFC, de formule générale (I)
   - 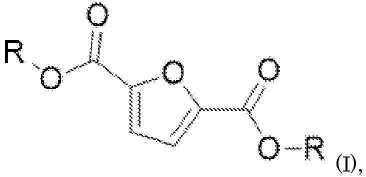
   - dans laquelle R représente un groupe alkyle comprenant de 1 à 3 atomes de carbone ou l'atome d'hydrogène, ladite composition comprenant également de l'éthylène glycol, noté EG, cette étape de transestérification étant opérée à une température croissant dans l'intervalle allant de 150°C à au moins 185°C avec un ratio molaire EG/RFC allant de 3 à 1,3 en présence d'un catalyseur acide de Lewis ;
   - Une étape de polycondensation en milieu fondu opérée à une température comprise dans l'intervalle allant de 220°C à 250°C et une pression inférieure à 100 mbar de manière à obtenir un polyester.
9. Procédé selon la réalisation précédente dans lequel, dans le composé de formule générale (I), R représente un groupe alkyle comprenant de 1 à 2 atomes de carbone.
10. Procédé selon l'une quelconque des réalisations 8 à 9 dans lequel l'étape de transestérification est réalisée pendant une durée allant de 1 à 5 h, préférentiellement de 2 à 4h.
11. Procédé selon l'une quelconque des réalisations 8 à 10 dans lequel la température la plus élevée à laquelle l'étape de transestérification est opérée est comprise dans l'intervalle allant de 185°C à 205°C, préférentiellement de 185°C à 200°C, et de manière très préférée allant de 190°C à 200°C.
12. Procédé selon l'une quelconque des réalisations 8 à 11 dans lequel, dans l'étape de transestérification, la température croît continûment dans l'intervalle allant de 160°C à au moins 185°C selon une rampe inférieure ou égale à +1°C/min, préférentiellement inférieure ou égale à +0,5°C/min.
13. Procédé selon l'une quelconque des réalisations 8 à 11 dans lequel, dans l'étape de transestérification, la température croît dans l'intervalle allant de 160°C à au moins 185°C par paliers compris dans un intervalle allant de 5 à 15°C.
14. Procédé selon la réalisation précédente dans lequel chaque palier dure indépendamment de 15 min à 2h30.
15. Procédé selon l'une quelconque des réalisations 8 à 14 dans lequel la durée entre la fin du premier palier et le début du dernier palier, ou entre la température la plus faible et la plus élevée de l'étape de transestérification lorsque la température augmente de manière continue, est au moins égale à 30 min.
16. Procédé selon l'une quelconque des réalisations 8 à 15 dans lequel le catalyseur utilisé dans l'étape de transestérification est choisi parmi l'acétylacétonate d'hafnium, l'acétylacétonate de zirconium, l'isopropoxyde de titane et le tétrabutoxyde de titane, et préférentiellement est le tétrabutoxyde de titane.
17. Procédé selon l'une quelconque des réalisations 8 à 16 dans lequel, dans l'étape de transestérification, le ratio molaire EG/RFC va de 2 à 1,5.
18. Procédé selon l'une quelconque des réalisations 8 à 17 dans lequel l'étape de transestérification est opérée à une pression allant de 0,8 à 2 bar, préférentiellement de 800 à 1700 mbar.
19. Procédé selon l'une quelconque des réalisations 8 à 18 dans lequel l'étape de polycondensation est opérée à une température croissant dans l'intervalle allant de 220°C à 250°C.
20. Procédé selon l'une quelconque des réalisations 8 à 19 dans lequel l'étape de polycondensation est opérée à une température croissant dans l'intervalle allant de 225°C à 240°C par paliers compris dans un intervalle allant de 2 à 10°C.
21. Procédé selon la réalisation précédente dans lequel chaque palier dure indépendamment de 15 min à 2h30.
22. Procédé selon l'une quelconque des réalisations 8 à 21 dans lequel l'étape de polycondensation est opérée à une pression inférieure à 50 mbar.
23. Procédé selon l'une quelconque des réalisations 8 à 22 dans lequel on procède, suite à l'étape de polycondensation, à une étape de mise en forme dans lequel le polycondensat est refroidi rapidement par mise en contact avec de l'eau puis découpé en granulés, puis séché à une température allant de 80°C à 100°C à pression inférieure ou égale à la pression atmosphérique sous atmosphère inerte.
24. Procédé de préparation selon la réalisation précédente dans lequel, suite à l'étape de mise en forme, on réalise une étape de cristallisation opérée à une température allant de 150°C à 210°C et une durée allant de 15 min à 2h30 puis une étape de post-condensation en phase solide opérée à une température croissant dans l'intervalle allant de 200°C à 260°C et une durée allant de 1 à 60 h.
25. Procédé selon la réalisation précédente dans lequel l'étape de cristallisation est opérée à une température allant de 180°C à 200°C durant 20 min à 1h30.
26. Procédé selon l'une des réalisations 24 à 25 dans lequel l'étape de post-condensation en phase solide est opérée à une température croissant dans l'intervalle allant de 210°C à 260°C, préférentiellement dans l'intervalle allant de 220°C à 250°C pendant une durée allant de 24 h à 72 h.
27. Procédé selon la réalisation précédente dans lequel la température de l'étape de post-condensation en phase solide est augmentée par paliers compris dans un intervalle allant de 2 à 10°C.
28. Procédé selon l'une quelconque des réalisations 8 à 27 dans lequel on procède, en tant que dernière étape dudit procédé, à la mise en œuvre du polymère sous forme d'extrusion, d'injection ou de moulage du polyester.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pressions sont, sauf mention contraire explicite, exprimées en valeur absolue.

### Polyester selon l'invention

L'invention concerne un polyester comprenant des motifs éthylène 2,5-furanedicarboxylate et des motifs diéthylène glycol, ledit polyester présentant une température de fusion Tf supérieure ou égale à 225°C, une viscosité intrinsèque supérieure ou égale à 0 ,65 dL/g, et dans lequel :
- la teneur en motif diéthylène glycol est inférieure à 4%mol ;
- la quantité de fonctions ester situées en bout de chaîne est inférieure à 100 meq/kg

Le polyester selon l'invention présente une teneur en motif diéthylène glycol, noté DEG, inférieure à 4%mol, de préférence inférieure à 3%mol et de manière préférée inférieure à 2%mol. Dans certaines conditions opératoires du procédé de synthèse, il est même possible d'obtenir un polyester présentant une teneur en motif DEG inférieure au seuil de détectabilité. Cette faible teneur explique en partie les propriétés du polyester selon l'invention, notamment une température de fusion élevée.

Le polyester selon l'invention présente une quantité de fonctions ester situées en bout de chaîne inférieure à 100 meq/kg. Alors que le polyester décrit dans le document WO 2015/137805 présente une quantité de fonctions acide carboxylique en bout de chaîne comprise entre 15 et 122 meq/kg, la demanderesse a découvert qu'il était primordial de contrôler la quantité de fonctions ester situées en bout de chaîne. L'association d'une faible teneur en motif DEG, inférieure à 4%mol, et d'une faible quantité de fonctions ester situées en bout de chaîne, inférieure à 100 meq/kg, de préférence inférieure à 80 meq/kg, et de manière préférée inférieure à 70 meq/kg permet en partie au polyester selon l'invention de présenter à la fois une viscosité intrinsèque relativement importante, supérieure à 0,65 dL/g, et une température de fusion élevée, supérieure ou égale à 225°C.

Le polyester selon l'invention comprend très peu de fins de chaînes décarboxylées. Préférentiellement, le nombre de fins de chaînes décarboxylées ramené au nombre d'unités répétitives du polyester est inférieur au seuil de détectabilité.

La masse molaire moyenne en nombre du polyester selon l'invention est préférentiellement supérieure à 19 000 g/mol en équivalent PMMA.

Le polyester selon l'invention présente préférentiellement une viscosité intrinsèque comprise entre 0,65 et 0,90 dL/g.

Le polyester selon l'invention présente préférentiellement une dispersité, notée D et représentant le ratio de la masse molaire moyenne en poids sur la masse molaire moyenne en nombre (D=Mw/Mn) inférieur à 1,9, de préférence compris entre 1,7 et 1,9.

L'enthalpie de fusion du polyester selon l'invention est supérieure à 30 J/g, de manière préférée supérieure à 35 J/g. Sa température de fusion est supérieure ou égale à 225°C, de manière préférée supérieure ou égale à 230°C. Le polyester selon l'invention présente une température de transition vitreuse T_{g} comprise entre 70 et 90°C.

### Procédé selon l'invention de synthèse d'un polyester

### Étape de transestérification

Le procédé selon l'invention comprend une étape de transestérification d'une composition comprenant un composé de type furanedicarboxylate, noté RFC, de formule générale (I) : 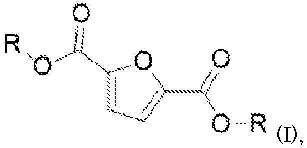 dans laquelle R représente un groupe alkyle comprenant de 1 à 3 atomes de carbone ou l'atome d'hydrogène, ladite composition comprenant également de l'éthylène glycol, noté EG, cette étape de transestérification étant opérée à une température croissant dans l'intervalle allant de 150°C à au moins 185°C avec un ratio molaire EG/RFC allant de 3 à 1,3 en présence d'un catalyseur acide de Lewis.

Par transestérification, on entend dans la présente aussi bien transestérification lorsque R représente un groupe alkyle comprenant de 1 à 3 atomes de carbone, qu'estérification lorsque R représente l'atome d'hydrogène.

L'étape de transestérification permet de produire des oligomères d'éthylène-furanedicarboxylate à partir de la réaction de l'éthylène glycol sur le composé furanedicarboxylate. Les conditions opératoires de cette étape ont une influence déterminante sur la structure du polyester obtenu. Dans la composition alimentant cette étape, le ratio molaire EG/RFC est préférentiellement compris entre 2 et 1,5. En dessous de 1,3, le taux d'avancement de la réaction est significativement impacté, tandis qu'au-delà de 3, la teneur en motif DEG dans le polyester devient trop importante.

De manière préférée, R représente un groupe alkyle comprenant de 1 à 2 atomes de carbone. Le composé de formule générale (I) correspond alors au diméthyl-2,5-furanedicarboxylate, ou au diéthyl-2,5-furanedicarboxylate.

L'étape de transestérification est réalisée pendant une durée allant préférentiellement de 1 à 5 h, de manière préférée allant de 2 à 4 h.

Conformément à l'invention, l'étape de transestérification est opérée à une température croissant dans l'intervalle allant de 150°C à au moins 185°C. Par « croissant dans l'intervalle allant de 150°C à au moins 185°C », on entend que l'étape de transestérification est opérée à une température comprise dans l'intervalle de température allant de 150°C à au moins 185°C, la température d'opération étant croissante au cours de l'étape de transestérification. La mise en œuvre d'un profil de température croissant permet d'obtenir un polyester qui présente, en particulier, une température de fusion très élevée notamment, en association avec les autres paramètres opératoires, par l'obtention d'une teneur en motif DEG et par une quantité de fonctions ester situées en bout de chaîne très faibles.

Dans un arrangement préféré, la température croît continûment dans l'intervalle allant de 150°C à au moins 185°C selon une rampe inférieure ou égale à +1°C/min, préférentiellement inférieure ou égale à +0,5°C/min. Lorsque la température la plus élevée est atteinte, un palier peut être maintenu jusqu'à ce que le taux de transestérification soit supérieur à 80%.

Dans un autre arrangement préféré, la température croît dans l'intervalle allant de 150°C à au moins 185°C par paliers compris dans un intervalle allant de 5 à 15°C. De manière préférée, chaque palier dure indépendamment de 15 min à 2h30. Très préférentiellement, l'étape de transestérification est opérée avec au moins trois paliers de température.

La température la plus élevée à laquelle l'étape de transestérification est opérée est préférentiellement comprise dans l'intervalle allant de 185°C à 205°C, préférentiellement de 185°C à 200°C, et de manière très préférée allant de 190°C à 200°C. En dessous de 185°C, le taux d'avancement de la réaction est significativement impacté, se traduisant par une conversion des bouts de chaines esters et une viscosité intrinsèque finale insuffisantes, tandis qu'au-delà de 205°C, la teneur en motif DEG dans le polyester augmente de manière significative.

De manière préférée, la durée entre la fin du premier palier et le début du dernier palier, ou entre la température la plus faible et la plus élevée de l'étape de transestérification lorsque la température augmente de manière continue, est au moins égale à 30 min, préférentiellement au moins égale à 45 min. En effet, il a été observé que lorsque la montée en température était trop rapide, des teneurs en motif DEG supérieures étaient obtenues.

Il a été observé par la demanderesse que l'application de ces conditions particulières de température permettait, les autres conditions opératoires de l'invention étant respectées, de limiter grandement la formation de motifs diéthylène glycol dans le polyester tout en assurant une bonne cinétique de réaction.

Par exemple, l'étape de transestérification peut être opérée pendant 1 h à 160°C, puis 1 h à 170°C et enfin 2 h à 195°C. En ce cas, les paliers sont respectivement de 10°C et 25°C et la durée respective de chacun des trois paliers est de 1h, 1h et 2h.

L'étape de transestérification est préférentiellement opérée à pression modérée, allant de 0,8 à 2 bar. De manière préférée, l'étape est opérée sous atmosphère inerte. L'opération à pression modérée, voire en légère surpression ou sous-pression, c'est-à-dire préférentiellement entre 800 et 1700 mbar, permet d'opérer l'étape de transestérification en phase liquide tout en évacuant les produits de réactions tels que l'alcool (si R est différent de H) ou l'eau (si R est l'atome d'hydrogène).

L'étape de transestérification est opérée en présence d'un catalyseur acide de Lewis. De manière préférée, le catalyseur acide de Lewis est choisi parmi l'acétylacétonate d'hafnium, l'acétylacétonate de zirconium, l'isopropoxyde de titane (TIS) et le tétrabutoxyde de titane (TBT). De manière préférée, le catalyseur acide de Lewis est le tétrabutoxyde de titane (TBT), ce dernier permettant d'obtenir un faible taux de motifs DEG ainsi qu'un faible taux de décarboxylation en bout de chaine.

L'étape de transestérification est opérée avec une teneur en catalyseur allant de 100 à 1000 ppm, préférentiellement allant de 150 à 500 ppm, et très préférentiellement allant de 200 à 450 ppm.

Ces conditions d'opération, avec une température croissant par paliers dans l'intervalle mentionné et en présence d'un catalyseur acide de Lewis, en particulier un catalyseur tel que le tétrabutoxyde de titane (TBT), permettent de limiter grandement la formation de motifs DEG dans le polymère, tout en garantissant un taux de transestérification supérieur à 80%, une quantité de fonctions ester situées en bout de chaîne inférieure à 100 meq/kg, de préférence inférieure à 80 meq/kg en fin de transestérification pour le prépolymère de polyester obtenu. Le taux de transestérification est déterminé en divisant la masse d'alcool (ou d'eau lorsque R=H) issue de l'étape de transestérification par la masse théorique d'alcool (ou d'eau lorsque R=H) produite en considérant que l'ensemble des fonctions ester (ou acide lorsque R=H) du composé RFC ont réagi.

La teneur en motifs DEG dans le polyester formé est inférieure à 4%mol, voire inférieure à 3%mol, de préférence inférieure à 2%mol. Dans les conditions de l'invention, en particulier avec l'utilisation d'une température croissante, il a été observé que l'ajout d'agents anti-formation de motifs DEG tels que décrits dans la demande WO2015/137805, par exemple des composés ammonium, en particulier des composés de type tétraalkylammonium, n'apportait pas d'effet supplémentaire. Ainsi, le procédé selon l'invention ne comprend de préférence pas d'ajout d'agents anti-formation de motifs DEG. En appliquant l'ensemble des conditions préférées, la teneur en motifs DEG dans le polyester obtenu à l'issue du procédé selon l'invention est en dessous de la limite de détectabilité par mesure de type RMN.

### Étape de polycondensation

Le procédé selon l'invention comprend une étape de polycondensation en milieu fondu opérée à une température comprise dans l'intervalle allant de 220°C à 250°C et une pression inférieure à 100 mbar.

À l'issue de l'étape de transestérification, la pression est abaissée progressivement pendant une durée comprise entre 60 et 120 min, préférentiellement comprise entre 80 et 100 min pour atteindre la pression opératoire de l'étape de polycondensation. Lorsque la pression est inférieure à 400 mbar, de manière préférée inférieure à 300 mbar et de manière très préférée inférieure à 200 mbar, la température du milieu réactionnel est augmentée jusqu'à atteindre la température opératoire initiale de l'étape de polycondensation. La hausse de température jusqu'à la température opératoire initiale de l'étape de polycondensation est réalisée sur une durée allant de 15 à 45 min.

L'utilisation d'une faible pression opératoire, et notamment la phase de dépressurisation, permet d'évacuer progressivement l'éthylène glycol présent dans le système réactionnel. De manière préférée, l'étape de polycondensation est opérée à une température croissant dans l'intervalle allant de 220°C à 250°C. Préférentiellement, la température croît dans l'intervalle allant de 225°C à 240°C par paliers compris dans un intervalle allant de 2 à 10°C. De manière préférée, chaque palier dure indépendamment de 15 min à 2h30. La demanderesse a observé que l'application d'un profil de température croissant au cours de l'étape de polycondensation permettait de limiter la formation de motifs DEG dans le polyester.

Par exemple, l'étape de polycondensation peut être opérée pendant 1 h à 230°C, puis 1 h à 240°C. En ce cas, chaque palier, à savoir l'écart de température entre deux températures d'opération successives, est de 10°C et la durée respective de chacun des deux paliers est de 1h et 2h.

Ainsi, la mise en œuvre de températures croissantes pour les étapes de transestérification et de polycondensation est particulièrement avantageuse en termes de contrôle de la structure du polyester obtenu. Elles permettent notamment d'obtenir un polyester qui comprend une quantité de bouts de chaîne décarboxylés en dessous du seuil de détectabilité.

L'étape de polycondensation est réalisée pendant une durée allant préférentiellement de 1 à 5 h, de manière préférée allant de 2 à 4 h. Cette étape est opérée sous faible pression, préférentiellement à une pression inférieure à 100 mbar, très préférentiellement à une pression inférieure à 50 mbar. Ces conditions particulières permettent de maintenir de très faible teneur en motifs DEG dans le polyester, voire des teneurs en dessous des limites de détectabilité.

L'étape de polycondensation est opérée avec une teneur en catalyseur allant de 100 à 1000 ppm, préférentiellement allant de 150 à 500 ppm, et très préférentiellement allant de 200 à 450 ppm. Le catalyseur est en général ajouté au système réactionnel lors de l'étape de transestérification. Un appoint en catalyseur, identique ou différent de celui utilisé lors de l'étape de transestérification, peut être fait si nécessaire lors de l'étape de polycondensation.

Le polyester obtenu à l'issue de cette étape, appelé polycondensat, peut ensuite être mis en forme, soit sous forme de granulés, soit sous forme d'un fil, soit sous forme d'un film. La mise sous forme de fil peut se faire au travers d'un système de filage, tel que connu de l'homme du métier, de manière à obtenir un fil utilisable en tant que tel, ou bien utilisable en assemblage de fils. La mise sous forme de fil peut se faire, par exemple, par passage sur une série de bobines contrôlées en température permettant d'étirer le fil jusqu'au diamètre désiré. La mise en forme sous forme d'un film peut se faire en passant le polycondensat sur une série de rouleaux refroidis de manière à former un film.

De manière préférée, le polycondensat est refroidi rapidement par mise en contact avec de l'eau et découpé en granulés. Cette mise en contact rapide permet de limiter l'agglomération des granulés entre eux. Cette étape de granulation est conduite de sorte à former des granulés substantiellement homogènes en taille, afin de faciliter les opérations ultérieures.

Dans cet arrangement préféré, les granulés sont ensuite séchés à une température allant de 80°C à 100°C à pression inférieure ou égale à la pression atmosphérique sous atmosphère inerte, par exemple sous atmosphère d'azote.

Le polyester obtenu à l'issue de l'étape de polycondensation est substantiellement amorphe.

Le polyester obtenu à l'issue de l'étape de polycondensation présente une viscosité intrinsèque comprise entre 0,35 et 0,50 dL/g. Cette viscosité intrinsèque est liée à la masse molaire du polyester, et est d'autant plus grande que la masse molaire du polyester est élevée. De manière préférée, la viscosité intrinsèque du polyester est comprise entre 0,4 et 0,50 dL/g.

### Étape de cristallisation

Suite à la mise en forme du polyester sous forme de granulés, on peut opérer une étape de cristallisation à une température comprise entre la température de cristallisation et la température de fusion du polyester. Cette étape permet d'augmenter la cristallinité du polyester.

Pour que la cristallisation puisse prendre place, l'étape de cristallisation est opérée à une température allant de 150°C à 210°C et une durée allant de 15 min à 2h30, préférentiellement opérée à une température allant de 180°C à 200°C durant 20 min à 1h30.

### Étape de post-condensation à l'état solide

Afin d'augmenter la masse molaire moyenne du polyester obtenu et sa température de fusion, on réalise avantageusement, suite à l'étape de cristallisation, une étape de post-condensation à l'état solide. Cette étape est mise en œuvre en chauffant le polyester à une température proche et inférieure à sa température de fusion.

Ainsi, l'étape de post-condensation en phase solide est opérée à une température croissant dans l'intervalle allant de 210°C à 260°C, préférentiellement dans l'intervalle allant de 220°C à 250°C pendant une durée allant de 24 h à 72 h. De manière préférée, la température de l'étape de post-condensation en phase solide est augmentée par paliers compris dans un intervalle allant de 2 à 10°C.

En opérant cette étape avec une température croissant dans l'intervalle allant de 210°C à 260°C, préférentiellement dans l'intervalle allant de 220°C à 250°C, de manière préférée en augmentant cette température par paliers compris dans un intervalle allant de 2 à 10°C, préférentiellement de 3 à 5°C, on maximise l'augmentation de la masse molaire et la température de fusion du polyester obtenu. De plus, et de manière surprenante, la zone de fusion, c'est-à-dire l'intervalle de température visible sur le thermogramme obtenu par DSC selon la méthode décrite plus loin dans la présente dans lequel la fusion est observée, est significativement réduite par rapport aux polyesters obtenus selon les procédés de l'art antérieur.

À l'issue de l'étape de post-condensation à l'état solide, la viscosité intrinsèque du polyester est augmentée, et de préférence est comprise entre 0,65 et 0,90 dL/g.

### Étape de mise en forme

Le polyester obtenu à l'issue de cette étape de post-condensation peut ensuite être mis en forme, soit sous forme de granulés, soit sous forme d'un fil, soit sous forme d'un film. La mise sous forme de fil peut se faire au travers d'un système de filage, tel que connu de l'homme du métier, de manière à obtenir un fil utilisable en tant que tel, ou bien utilisable en assemblage de fils. La mise sous forme de fil peut se faire, par exemple, par extrusion de polymère fondu au travers d'un pack filière pourvu d'une multitude de trous submillimétriques permettant de créer autant de filament. Le multi-filament peut ensuite être refroidi, pourvu d'un ensimage et étiré sur une série de godets à température contrôlée pour obtenir les caractéristiques géométriques et thermomécaniques désirées. Ces étapes peuvent se faire en une fois ou en plusieurs fois.

La mise en forme d'un film peut se faire en extrudant le polycondensat fondu puis en passant sur une série de rouleaux refroidis de manière à former un film d'épaisseur maitrisée. Des mises en forme d'extrusion soufflage ou de thermoformage peuvent être appliquées à ces films.

Les granulés décrits ci-dessous constituent des semi-produits qui peuvent ensuite être mis en forme avec les techniques classiques de plasturgie (injection, moulage, extrusion...). Le caractère semi-cristallin du polymère peut en particulier être intéressant pour réaliser des corps creux avec la formation d'une préforme amorphe à partir de granulés puis son soufflage entre la température de transition vitreuse et la température de fusion des cristallites dans un moule.

Dans le cadre de l'ensemble des applications, la tenue thermique en service de la pièce sera d'autant plus grande que la température de fusion sera élevée et plus précisément que le début du phénomène de fusion sera à une température la plus élevée possible.

Par ailleurs, pour toutes les mises en forme qui font intervenir la cristallisation, une plus faible température de celle-ci permet d'avoir des conditions opératoires plus douces et moins énergivores. Ainsi, pour un polymère semi-cristallin, une différence entre la température de fusion et la température de cristallisation la plus grande possible est particulièrement appréciable.

### Méthodes de mesures

### Quantité de fonctions ester situées en bout de chaîne

La mesure de la quantité de fonctions ester situées en bout de chaîne est réalisée par spectroscopie RMN.

Celle-ci est réalisée soit dans l'HFIP-d (hexafluoro-2-propanol deutéré) afin de voir les fins de chaînes alcool, soit dans un mélange TFA-d/CDCl3-25/75 vol./vol. pour étudier les fins de chaînes ester et déterminer le taux de DEG, où TFA-d représente l'acide trifluoroacétique deutéré, CDCl3 représente le chloroforme deutéré.

Le calcul du % molaire de fins de chaînes par motif est calculé de la sorte : $fin de chaîne alcool par unité de répétition = \frac{\frac{\int signal CH 2 alpha alcool}{2}}{\frac{\int signal furanique}{2}}$ $fin de chaîne ester par unité de répétition = \frac{\frac{\int signal CH 3 ester}{3}}{\frac{\int signal furanique}{2}}$

Les signaux décarboxylés ne sont pas observables dans le procédé selon l'invention, ils sont donc négligés.

### Méthode de mesure de la teneur en motifs DEG

La mesure de la quantité de motifs DEG est réalisée par spectroscopie RMN.

Une valeur 200 est donnée au signal furanique, intégré entre 7.29 et 7.36 ppm (nombre de protons furaniques pour 100 unités répétitives), puis la formule suivante est appliquée : $% DEG molaire par rapport aux furaniques = \frac{\frac{\int signal CH 2 alpha é ther}{4}}{\frac{\int signal furanique}{2}} ∗ 100$

Ainsi, le %DEG est exprimé pour 100 motifs de répétition.

### Températures de transition vitreuse, de fusion et de cristallisation

Les températures de transition vitreuse Tg, de fusion Tf et de cristallisation sont mesurées de manière connue par calorimétrie différentielle, ou DSC (Differential Scanning Calorimetry) selon les normes ISO 11357-2 de mars 2020 pour la température de transition vitreuse, et ISO 11357-3 de mars 2018 pour les températures et enthalpies de fusion et cristallisation avec la modification suivante : la rampe de température appliquée est de 1,5 K/min plutôt que la rampe recommandée de 10 K/min ou 20 K/min, cette vitesse de variation de température ne permettant pas de déterminer correctement la température de cristallisation et de fusion.

En appliquant la rampe de 20 K/min, les températures de fusion mesurées sont d'environ 8°C plus élevées que les températures mesurées avec la rampe de 1,5 K/min.

La Tg, les températures de cristallisation froides et chaudes, le taux de cristallinité et la Tf ont été mesurées par DSC, en effectuant le cycle suivant :
Une montée de 20°C à 260°C, un isotherme de 5 min à 260°C suivi d'une descente en température de 260°C à 20°C, puis un isotherme de 5 min à 20°C, et enfin une dernière montée de 20°C à 260°C. La vitesse a été toujours fixée à 1,5°C/min, en montée et en descente.

### Viscosité Intrinsèque (IV)

La mesure de la viscosité intrinsèque (IV) est réalisée en solution, dans un mélange phénol/ortho-dichlorobenzène.

Les polymères sont solubilisés à une concentration C égale à 5 g/L dans un mélange équimassique de phénol/ortho-dichlorobenzène. Afin de favoriser la dissolution, le mélange du solvant et des granulés est placé quelques minutes à 120°C sous vive agitation. Enfin, avant d'être introduite dans le viscosimètre capillaire de type Ubbelohde, la solution est filtrée à l'aide de filtres en PTFE de 0,45 µm.

La mesure de la viscosité intrinsèque (IV) est réalisée à 25°C et calculée à l'aide des formules suivantes : $η \left(intrinsèque\right) = \frac{\sqrt{2}}{C} \times \sqrt{\left(η\left(spécifique\right)-ln\left(η\left(relative\right)\right)\right.}$

Avec C la concentration de la solution, et les viscosités spécifiques et relatives calculables par les formules suivantes : $η \left(spécifique\right) = \left(η-η0\right) / η 0$ $η \left(relative\right) = η / η 0$ où η0 correspond à la viscosité du solvant seul et η à la viscosité de la solution macromoléculaire.

### Mesure de la cristallinité du polymère

La cristallinité du polymère est déterminée par la formule : ((ΔHm échantillon - ΔHc échantillon)/ΔHm°)*100 avec ΔHm échantillon, l'enthalpie de fusion en première montée, ΔHc échantillon, l'enthalpie de cristallisation froide en première montée, et ΔHm° l'enthalpie de fusion standard du PEF (137 J/g)).

### Mesure de type chromatographie d'exclusion stérique (SEC)

Les analyses SEC sont effectuées dans l'hexafluoroisopropanol (HFIP). Les solutions sont préparées à une concentration de 1 mg/mL. Avant l'analyse, les échantillons sont filtrés à l'aide de filtres en PTFE de 0,45 µm.

L'échantillon à analyser est introduit dans des colonnes APC XT à l'aide d'un injecteur d'échantillon automatique (Sample Manager pFTN) et une pompe Waters Acquity Advanced Polymer Chromatography (APC). Un passeur automatique (Sample Manager pFTN) permet de passer à l'échantillon suivant.

Méthode SEC pour exprimer la Mn en équivalent PMMA :
Les masses molaires sont évaluées au moyen d'un détecteur à indice de réfraction différentiel (détecteur Waters RI) permettant de remonter à la masse molaire relative de nos polymères à partir d'une courbe de calibration construite à partir d'étalons de PMMA à 35°C.

### Exemples

Dans les exemples qui suivent, les pressions sont exprimées en bar absolu.

### Exemple 1

On alimente une étape de transestérification avec une composition comprenant du diméthylfuranedicarboxylate (DMF) et de l'éthylène glycol (EG) avec un ratio molaire EG/DMF égal à 1,7. Cette composition est mise en présence de 400 ppm de catalyseur tétrabutoxyde de titane (TBT).

L'étape de transestérification est opérée à 1,5 bar avec une température évoluant de 160°C à 194°C avec une rampe de température de +0,2°C/min pendant 3 h, la température la plus élevée étant maintenue une fois atteinte.

On obtient à l'issue de cette étape un prépolymère dans lequel la présence de motif DEG n'est pas détectable. Le taux de transestérification est de 82%.

La pression du milieu réactionnel est abaissée à 200 mbar en 20 min en maintenant dans un premier temps la température à 194°C. Lorsque la pression atteint 200 mbar, la température est augmentée afin d'atteindre 230°C en 30 min tout en continuant d'abaisser la pression. Enfin, 40 min après avoir atteint 230°C, c'est-à-dire lorsque P<1.3 mbar, on démarre l'étape de polycondensation, au cours de laquelle la température est maintenue à 230°C pendant 1h, puis portée à 240°C et maintenue pendant 1h.

À l'issue de l'étape de polycondensation, le polycondensat est refroidi rapidement par mise en contact avec de l'eau et découpé en granulés.

Le polyester PEF obtenu à l'issue de l'étape de polycondensation présente les caractéristiques suivantes :
- Viscosité intrinsèque (IV) : 0.40 dL/g
- Teneur en motif DEG :1,8 mol% par rapport au motif furanique
- Teneur en fin de chaîne alcool : 150 meq/kg
- Quantité de fonctions ester situées en bout de chaîne : 61 meq/kg
- Teneur en fin de chaîne décarboxylée : non détectée
- Masse molaire moyenne en nombre Mn (équivalent PMMA) : 21600 g/mol
- Dispersité (D) : 1,7
- Température de transition vitreuse : 82°C
- Température de cristallisation : 150°C
- Enthalpie de cristallisation : 45 J/g
- Taux de cristallinité : 0% (ΔH_{f}°=137 J/g)

Les granulés obtenus sont ensuite séchés pendant 5 h à 100°C puis sont traités dans une étape de cristallisation dans laquelle ils sont portés à une température de 190°C pendant 1h30.

A l'issue de la cristallisation, on met en œuvre une étape de post-condensation à l'état solide en portant les granulés à une température de 217°C pendant 6 h, puis à une température de 227°C pendant 34h, sous flux d'azote.

Le polyester obtenu à l'issue de cette étape présente les caractéristiques suivantes :
- Viscosité intrinsèque (IV) : 0.71 dL/g
- Taux de cristallinité : 52%
- Température de fusion : 234,5 °C

La température de fusion mesurée en appliquant une rampe de température de 20 K/min telle que préconisée dans la norme ISO 11357-3 de mars 2018 est de 242,5°C.

### Exemple 2

On alimente une étape de transestérification avec une composition comprenant du diméthylfuranedicarboxylate (DMF) et de l'éthylène glycol (EG) avec un ratio molaire EG/DMF égal à 1,7. Cette composition est mise en présence de 400 ppm de catalyseur tétrabutoxyde de titane (TBT).

L'étape de transestérification est opérée à 1,5 bar avec une température évoluant de 160°C à 180°C avec une rampe de température de +0,2°C/min pendant 3 h, la température la plus élevée étant maintenue une fois atteinte.

On obtient à l'issue de cette étape un prépolymère dans lequel la présence de motif DEG n'est pas détectable. Le taux de transestérification est de 73%.

La pression du milieu réactionnel est abaissée à 200 mbar en 20 min en maintenant dans un premier temps la température à 180°C. Lorsque la pression atteint 200 mbar, la température est augmentée afin d'atteindre 230°C en 30 min tout en continuant d'abaisser la pression. Enfin, 40 min après avoir atteint 230°C, c'est-à-dire lorsque P<1.3 mbar, on démarre l'étape de polycondensation, au cours de laquelle la température est maintenue à 230°C pendant 1h, puis portée à 240°C et maintenue pendant 1h.

À l'issue de l'étape de polycondensation, le polycondensat est refroidi rapidement par mise en contact avec de l'eau et découpé en granulés.

Le polyester PEF obtenu à l'issue de l'étape de polycondensation présente les caractéristiques suivantes :
- Viscosité intrinsèque (IV) : 0.39 dL/g
- Teneur en motif DEG :1,4 mol% par rapport au motif furanique
- Teneur en fin de chaîne alcool : 112 meq/kg
- Quantité de fonctions ester situées en bout de chaîne : 127 meq/kg
- Teneur en fin de chaîne décarboxylée : non détectée
- Masse molaire moyenne en nombre Mn (équivalent PMMA) : 18100 g/mol
- Dispersité (D) : 1,8
- Température de transition vitreuse : 85°C
- Température de cristallisation : 161°C
- Enthalpie de cristallisation : 44,3 J/g
- Cristallinité : 0% (ΔH_{f}°=137 J/g)

Les granulés obtenus sont ensuite séchés pendant 5 h à 100°C puis sont traités dans une étape de cristallisation dans laquelle ils sont portés à une température de 190°C pendant 1h30.

A l'issue de la cristallisation, on met en œuvre une étape de post-condensation à l'état solide en portant les granulés à une température de 217°C pendant 6 h, puis à une température de 227°C pendant 34h, sous flux d'azote.

Le polyester obtenu à l'issue de cette étape présente les caractéristiques suivantes :
- Viscosité intrinsèque (IV) : 0.55 dL/g
- Cristallinité : 50%
- Température de fusion : 232,5 °C

On constate que le polyester obtenu présente un moins bon compromis température de fusion / Viscosité intrinsèque par rapport au polymère obtenu dans l'exemple 1, avec en particulier un IV plus faible de 23%.

### Exemple 3

On alimente une étape de transestérification avec une composition comprenant du diméthylfuranedicarboxylate (DMF) et de l'éthylène glycol (EG) avec un ratio molaire EG/DMF égal à 1,7. Cette composition est mise en présence de 400 ppm de catalyseur tétrabutoxyde de titane (TBT).

L'étape de transestérification est opérée à 1,5 bar avec une température évoluant de 180°C à 230°C avec une rampe de température de +0,5°C/min pendant 1h30, la température étant ensuite maintenue à 230°C pendant 40 min.

La pression du milieu réactionnel est abaissée à 200 mbar en 20 min en maintenant dans un premier temps la température à 230°C. Lorsque la pression atteint 200 mbar, la température est augmentée afin d'atteindre 240°C en 20 min tout en continuant d'abaisser la pression. Enfin, 50 min après avoir atteint 240°C, c'est-à-dire lorsque P<1.3 mbar, on démarre l'étape de polycondensation, au cours de laquelle la température est maintenue à 240°C pendant 3h.

À l'issue de l'étape de polycondensation, le polycondensat est refroidi rapidement par mise en contact avec de l'eau et découpé en granulés.

Le polyester PEF obtenu à l'issue de l'étape de polycondensation présente les caractéristiques suivantes :
- Viscosité intrinsèque (IV) : 0.5 dL/g
- Teneur en motif DEG : 5,4 mol% par rapport au motif furanique
- Masse molaire moyenne en nombre Mn (équivalent PMMA) : 26000 g/mol
- Dispersité (D) : 1,8
- Température de cristallisation : 169°C
- Cristallinité : 0% (ΔH_{f}°=137 J/g)

Les granulés obtenus sont ensuite séchés pendant 5 h à 100°C puis sont traités dans une étape de cristallisation dans laquelle ils sont portés à une température de 180°C pendant 3h.

A l'issue de la cristallisation, on met en œuvre une étape de post-condensation à l'état solide en portant les granulés à une température de 200°C pendant 48 h sous flux d'azote.

Le polyester obtenu à l'issue de cette étape présente les caractéristiques suivantes :
- Viscosité intrinsèque (IV) : 0.7 dL/g
- Température de fusion : 218°C

Les conditions sévères de transestérification associées aux autres étapes de synthèse permettent d'obtenir un polyester présentant une viscosité élevée, au détriment de sa température de fusion.

## Revendications

1. Polyester comprenant des motifs éthylène 2,5-furanedicarboxylate et des motifs diéthylène glycol, ledit polyester présentant une température de fusion Tf supérieure ou égale à 225°C, une viscosité intrinsèque supérieure ou égale à 0 ,65 dL/g, et dans lequel :
• la teneur en motif diéthylène glycol, noté DEG, est inférieure à 4%mol,
• la quantité de fonctions ester situées en bout de chaîne est inférieure à 100 meq/kg, la température de fusion Tf, la viscosité intrinsèque, la teneur en motif diéthylène glycol et la quantité de fonction ester situées en bout de chaine étant déterminées comme indiqué dans la description.

2. Polyester selon la revendication précédente dans lequel la température de fusion Tf est supérieure ou égale à 230°C.

3. Polyester selon l'une quelconque des revendications précédentes présentant une dispersité inférieure à 1,9, de préférence compris entre 1,7 et 1 9, déterminée comme indiqué dans la description.

4. Polyester selon l'une quelconque des revendications précédentes dans lequel la température de transition vitreuse T_{g} est comprise entre 70 et 90° C, déterminée comme indiqué dans la description.

5. Procédé de préparation d'un polyester selon la revendication 1 comprenant successivement :
• Une étape de transestérification d'une composition comprenant un composé de type furanedicarboxylate, noté RFC, de formule générale (I) 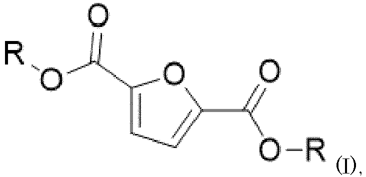 dans laquelle R représente un groupe alkyle comprenant de 1 à 3 atomes de carbone ou l'atome d'hydrogène, ladite composition comprenant également de l'éthylène glycol, noté EG, cette étape de transestérification étant opérée à une température croissant dans l'intervalle allant de 150°C à au moins 185°C avec un ratio molaire EG/RFC allant de 3 à 1,3 en présence d'un catalyseur acide de Lewis ;
• Une étape de polycondensation en milieu fondu opérée à une température croissant dans l'intervalle allant de 220°C à 250°C et une pression inférieure à 100 mbar de manière à obtenir un polyester.

6. Procédé selon la revendication précédente dans lequel, dans le composé de formule générale (I), R représente un groupe alkyle comprenant de 1 à 2 atomes de carbone.

7. Procédé selon l'une quelconque des revendications 5 à 6 dans lequel la température la plus élevée à laquelle l'étape de transestérification est opérée est comprise dans l'intervalle allant de 185°C à 205°C, préférentiellement de 185°C à 200°C, et de manière très préférée allant de 190°C à 200°C.

8. Procédé selon l'une quelconque des revendications 5 à 7 dans lequel, dans l'étape de transestérification, la température croît continûment dans l'intervalle allant de 160°C à au moins 185°C selon une rampe inférieure ou égale à +1°C/min, préférentiellement inférieure ou égale à +0,5°C/min.

9. Procédé selon l'une quelconque des revendications 5 à 7 dans lequel, dans l'étape de transestérification, la température croît dans l'intervalle allant de 160°C à au moins 185°C par paliers compris dans un intervalle allant de 5 à 15°C.

10. Procédé selon l'une quelconque des revendications 5 à 9 dans lequel le catalyseur utilisé dans l'étape de transestérification est choisi parmi l'acétylacétonate d'hafnium, l'acétylacétonate de zirconium, l'isopropoxyde de titane et le tétrabutoxyde de titane, et préférentiellement est le tétrabutoxyde de titane.

11. Procédé selon l'une quelconque des revendications 5 à 10 dans lequel on procède, suite à l'étape de polycondensation, à une étape de mise en forme dans lequel le polycondensat est refroidi rapidement par mise en contact avec de l'eau et découpé en granulés, puis séché à une température allant de 80°C à 100°C à pression inférieure ou égale à la pression atmosphérique sous atmosphère inerte.

12. Procédé de préparation selon la revendication précédente dans lequel, suite à l'étape de mise en forme, on réalise une étape de cristallisation opérée à une température allant de 150°C à 210°C et une durée allant de 15 min à 2h30 puis une étape de post-condensation en phase solide opérée à une température croissant dans l'intervalle allant de 200°C à 260°C et une durée allant de 1 à 60 h.

13. Procédé selon l'une quelconque des revendications 5 à 12 dans lequel on procède, en tant que dernière étape dudit procédé, à la mise en œuvre du polymère sous forme d'extrusion, d'injection ou de moulage du polyester.

## Patentansprüche

1. Polyester, umfassend Ethylen-2,5-furandicarboxylat-Einheiten und Diethylenglykol-Einheiten, wobei der Polyester eine Schmelztemperatur Tf größer als oder gleich 225 °C, eine Grenzviskosität größer als oder gleich 0,65 dl/g aufweist, und wobei:
• der Gehalt an Diethylenglykol-Einheit, bezeichnet als DEG, weniger als 4 Mol-% beträgt,
• die Menge an Esterfunktionen, die sich am Kettenende befinden, weniger als 100 meq/kg beträgt, wobei die Schmelztemperatur Tf, die Grenzviskosität, der Gehalt an Diethylenglykol-Einheit und die Menge an Esterfunktionen, die sich am Kettenende befinden, wie in der Beschreibung angegeben bestimmt werden.

2. Polyester nach dem vorhergehenden Anspruch, wobei die Schmelztemperatur Tf größer oder gleich 230 °C ist.

3. Polyester nach einem der vorhergehenden Ansprüche mit einer Dispersität von weniger als 1,9, vorzugsweise zwischen 1,7 und 1,9, bestimmt wie in der Beschreibung angegeben.

4. Polyester nach einem der vorhergehenden Ansprüche, wobei die Glasübergangstemperatur T_{g} zwischen 70 und 90 °C liegt, bestimmt wie in der Beschreibung angegeben.

5. Verfahren zur Herstellung eines Polyesters nach Anspruch 1, umfassend nacheinander:
• einen Schritt des Umesterns einer Zusammensetzung, die eine Verbindung vom Typ Furandicarboxylat, bezeichnet als RFC, der folgenden allgemeinen Formel (I) umfasst 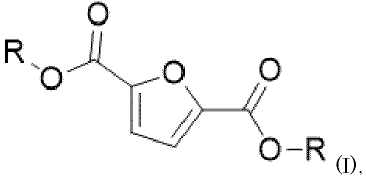 wobei R für eine Alkylgruppe mit 1 bis 3 Kohlenstoffatomen oder das Wasserstoffatom steht, wobei die Zusammensetzung auch Ethylenglykol, bezeichnet als EG, umfasst, wobei dieser Veresterungsschritt bei einer Temperatur, die im Intervall von 150 °C bis mindestens 185 °C zunimmt, mit einem EG/RFC-Molverhältnis im Bereich von 3 bis 1,3 in Gegenwart eines Lewis-Säure-Katalysators durchgeführt wird;
• einen Schritt der Polykondensation in der Schmelze, der bei einer Temperatur, die im Intervall von 220 °C bis 250 °C zunimmt, und einem Druck von weniger als 100 mbar durchgeführt wird, wodurch ein Polyester erhalten wird.

6. Verfahren nach dem vorhergehenden Anspruch, wobei in der Verbindung der allgemeinen Formel (I) R für eine Alkylgruppe mit 1 bis 2 Kohlenstoffatomen steht.

7. Verfahren nach einem der Ansprüche 5 bis 6, wobei die höchste Temperatur, bei der der Umesterungsschritt durchgeführt wird, im Bereich von 185 °C bis 205 °C, bevorzugt von 185 °C bis 200 °C und sehr bevorzugt von 190 °C bis 200 °C liegt.

8. Verfahren nach einem der Ansprüche 5 bis 7, wobei die Temperatur im Umesterungsschritt im Intervall von 160 °C bis mindestens 185 °C mit einer Steigungsrate kleiner oder gleich +1 °C/min, bevorzugt kleiner oder gleich +0,5 °C/min, kontinuierlich zunimmt.

9. Verfahren nach einem der Ansprüche 5 bis 7, wobei im Umesterungsschritt die Temperatur im Intervall von 160 °C bis mindestens 185 °C stufenweise in einem Intervall von 5 bis 15 °C zunimmt.

10. Verfahren nach einem der Ansprüche 5 bis 9, wobei der Katalysator, der im Umesterungsschritt verwendet wird, aus Hafniumacetylacetonat, Zirconiumacetylacetonat, Titanisopropoxid und Titantetrabutoxid ausgewählt wird und vorzugsweise Titantetrabutoxid ist.

11. Verfahren nach einem der Ansprüche 5 bis 10, wobei im Anschluss an den Polykondensationsschritt ein Formgebungsschritt durchgeführt wird, in welchem das Polykondensat rasch abgekühlt wird, indem es mit Wasser in Kontakt gebracht wird, und in Granulatkörner zerteilt wird und danach bei einer Temperatur von 80 °C bis 100 °C bei einem Druck, welcher gleich dem Atmosphärendruck oder geringer als dieser ist, unter Inertgasatmosphäre getrocknet wird.

12. Herstellungsverfahren nach dem vorhergehenden Anspruch, wobei im Anschluss an den Formgebungsschritt ein Kristallisationsschritt bei einer Temperatur im Bereich von 150 °C bis 210 °C und einer Dauer von 15 min bis 2 h 30 durchgeführt wird und dann ein Festphasen-Nachkondensationsschritt bei einer Temperatur, die im Intervall von 200 °C bis 260 °C ansteigt, und einer Dauer von 1 bis 60 h durchgeführt wird.

13. Verfahren nach einem der Ansprüche 5 bis 12, wobei das Polymer als letzter Schritt des Verfahrens in Form von Extrusion, Spritzen oder Formen des Polyesters verwendet wird.

## Claims

1. Polyester comprising ethylene 2,5-furandicarboxylate units and diethylene glycol units, said polyester having a melting temperature Tf of greater than or equal to 225°C, an intrinsic viscosity of greater than or equal to 0.65 dL/g, and in which:
• the amount of diethylene glycol unit, denoted DEG, is less than 4 mol%,
• the quantity of ester functions in chain end situations is less than 100 meq/kg, the melting temperature Tf, the intrinsic viscosity, the amount of diethylene glycol unit and the quantity of ester functions in chain end situations being measured according to the description.

2. Polyester according to the preceding claim, wherein the melting temperature Tf is greater than or equal to 230°C.

3. Polyester according to either of the preceding claims, having a dispersity of less than 1.9, preferably of between 1.7 and 1.9, measured according to the description.

4. Polyester according to any one of the preceding claims, wherein the glass transition temperature T_{g} is between 70 and 90°C, measured according to the description.

5. Process for preparing a polyester, comprising successively:
• a step of tranesterifying a composition comprising a furandicarboxylate compound, denoted RFC, of general formula (I) 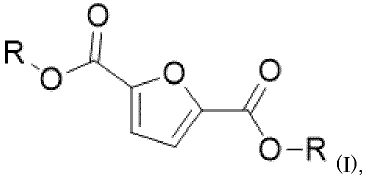 in which R represents an alkyl group comprising from 1 to 3 carbon atoms or the hydrogen atom, said composition also comprising ethylene glycol, denoted EG, this transesterifying step being operated at an increasing temperature in the range from 150°C to at least 185°C with a molar ratio EG/RFC of from 3 to 1.3 in the presence of a Lewis acid catalyst;
• a melt polycondensation step operated at an increasing temperature within the range from 220°C to 250°C and a pressure of less than 100 mbar, to give a polyester.

6. Process according to the preceding claim, wherein R in the compound of general formula (I), represents an alkyl group comprising from 1 to 2 carbon atoms.

7. Process according to either of Claims 5 and 6, wherein the highest temperature at which the transesterifying step is operated is within the range from 185°C to 205°C, preferably from 185°C to 200°C, and very preferably from 190°C to 200°C.

8. Process according to any one of Claims 5 to 7, wherein the temperature in the transesterifying step increases continuously within the range from 160°C to at least 185°C according to a ramp of less than or equal to +1°C/min, preferably less than or equal to +0,5°C/min.

9. Process according to any one of Claims 5 to 7, wherein the temperature in the transesterifying step increases within the range from 160°C to at least 185°C in stages of within a range from 5 to 15°C.

10. Process according to any one of Claims 5 to 9, wherein the catalyst used in the transesterifying step is selected from hafnium acetylacetonate, zirconium acetylacetonate, titanium isopropoxide and titanium tetrabutoxide, and preferably is titanium tetrabutoxide.

11. Process according to any one of Claims 5 to 10, wherein, following the polycondensation step, a shaping step is performed in which the polycondensate is cooled rapidly by contacting with water and is pelletized, and then dried at a temperature of from 80°C to 100°C at a pressure less than or equal to the atmospheric pressure in an inert atmosphere.

12. Preparation process according to the preceding claim, wherein, following the shaping step, a crystallizing step is carried out, which is operated at a temperature of from 150°C to 210°C for a time of from 15 min to 2.5 h, followed by a solid-phase post-condensation step which is operated at an increasing temperature within the range from 200°C to 260°C for a time of from 1 to 60 h.

13. Process according to any one of Claims 5 to 12, in which, as a last step in said process, the polymer is employed in the form of extrusion, injection or moulding of the polyester.
